# EUROPÄISCHE PATENTSCHRIFT

(11) **EP 1 172 167 B1**
(45) Veröffentlichungstag und Bekanntmachung des Hinweises auf die Patenterteilung: **30.08.2006**
(21) Anmeldenummer: 00115286.7
(22) Anmeldetag: 14.07.2000
(51) Int. Cl.: B23D 51/10, B23B 31/113

(54) **Spanneinrichtung für Werkzeug mit auswechselbaren Sägeblättern**
Holding device for machine tools with exchangeable saw blades
Dispositif de maintien de lames de scie interchangeables

(43) Veröffentlichungstag der Anmeldung: 16.01.2002
(73) Patentinhaber: A & M Electric Tools GmbH, 71364 Winnenden (DE)
(72) Erfinder: Langhoff, Boris, 71522 Backnang (DE); Vögele, Roland, 71364 Winnenden (DE); Beuthner, Michael, 70199 Stuttgart (DE)
(74) Vertreter: Riedel, Peter

(56) Entgegenhaltungen:
- EP-A- 0 719 610
- DE-A- 4 102 011
- US-A- 3 750 283

## Beschreibung

Die Erfindung betrifft eine Spanneinrichtung, insbesondere für Werkzeuge mit auswechselbaren Bearbeitungseinsätzen der im Oberbegriff des Anspruchs 1 angegebenen Gattung, und wie aus US-A-3 750 283 bekannt ist.

In der US 3,750,283 ist eine Befestigungseinrichtung für ein Sägeblatt einer Stichsäge beschrieben, wobei das zur Halterung vorgesehene Ende des Sägeblattes in eine Öffnung eines Aufnahmeelementes gesteckt und mittels eines Spannelementes fixiert wird. Das Spannelement ist als Hülse ausgestaltet, die auf einem Zapfen des Aufnahmeelements drehbar gelagert ist. Sowohl der Zapfen als auch die Hülse weisen jeweils ein Gewinde auf, wobei die Gewinde ineinandergreifen, so daß zusätzlich zur Drehbewegung auch eine axiale Bewegung erfolgt.

Die bekannte Anordnung ist aufgrund der kompliziert gestalteten Einzelteile aufwendig und damit teuer in der Herstellung. Ferner hat sich gezeigt, daß durch den Betrieb der Säge eine erhebliche Verschmutzung auftritt, wobei sich Späne oder Sägemehl auch in den Bereich des Gewindes setzen, so daß die Spannvorrichtung nur noch unter Aufwendung sehr hoher Kräfte und unter Umständen überhaupt nicht mehr betätigbar ist.

Aus der DE 41 02 011 A1 ist eine Einrichtung zum Festspannen eines Sägeblattes im Stößel einer handgeführten Stichsägemaschine bekannt. An dem Stößel ist eine Halterung befestigt, die das mit zwei gegenüberliegenden nasenförmigen Ansätzen versehene Einspannende des Sägeblattes aufnimmt. Zum Spannen und Freigeben des Sägeblatteinspannendes ist ein von außen zugängliches und drehbar angeordnetes Stellglied vorgesehen. Das Einspannende des Sägeblattes ist in einer Zentrierhülse fixierbar und mittels einer verdrehbaren, unter der rückstellenden Wirkung einer Drehfeder stehenden Spannhülse festklemmbar. Die Spannhülse führt beim Verdrehen durch den Einfluß von Schrägflächen eine Axialbewegung aus.

Der vorliegenden Erfindung liegt daher die Aufgabe zugrunde, eine Spanneinrichtung der im Oberbegriff des Anspruchs 1 genannten Gattung zu schaffen, die bei einfachem Aufbau leicht handhabbar und über längere Einsatzzeit funktionssicher ist.

Diese Aufgabe wird durch eine Spanneinrichtung mit den Merkmalen des Anspruchs 1 gelöst.

Die erfindungsgemäße Spanneinrichtung ist einfach im Aufbau und daher kostengünstig herzustellen. Darüber hinaus benötigt die Spanneinrichtung eine reduzierte Baugröße und sie weist eine bessere Führung des zu haltenden Endes des Bearbeitungseinsatzes auf. Die Spanneinrichtung ist verschmutzungsunanfällig und somit weitgehend wartungsfrei. Das Spannelement ist leicht zugänglich und ohne Werkzeug zu handhaben, wobei es als besonders günstig angesehen wird, daß lediglich geringe Kräfte zur Betätigung des Spannmittels beim Auswechseln des Bearbeitungseinsatzes erforderlich sind.

Besonders bevorzugt ist eine solche Spanneinrichtung bei elektrisch oder pneumatisch angetriebenen Stichsägen einsetzbar, wobei das Aufnahmeelement ein Stößel eines eine,alternierende Längsbewegung ausführenden Werkzeugs ist. Das Spannelement ist bei derartigen Ausführungen als Hülse gestaltet, deren einem stirnseitigen Ende des Stößels benachbarter Bereich eine auf den Bearbeitungseinsatz wirkende Spannfläche aufweist. Das Aufnahmeelement greift mit einem Führungselement, beispielsweise einem quer durch das Aufnahmeelement ragenden Bolzen, in eine Schrägführung, beispielsweise zwei in dem Mantel der Hülse gebildeten Nuten, wobei die Nuten sich gegenüberliegend und bezogen auf die Spannfläche schräg verlaufend angeordnet sind. Beim Verdrehen des Spannelementes relativ zu dem Aufnahmeelement bewirkt diese Schrägführung, daß das Spannelement mit seiner Spannfläche axial gegen das Aufnahmeelement geführt wird und der Bearbeitungseinsatz so festgelegt wird. Das zu haltende Ende des Bearbeitungseinsatzes ragt durch das Führungselement, nämlich dem Bolzen in dem Aufnahmeelement. Der Bearbeitungseinsatz ist somit geführt.

Ein in seiner Gestalt U-förmiges Sicherungsblech ist aus Federstahl gebildet und überkragt den Bolzen im Inneren des vorzugsweise hohlzylindrischen Stößels. Das Sicherungsblech greift in Ausnehmungen am Umfang des Bolzens ein und verhindert so ein axiales Verschieben des Bolzens im Stößel. Das Sicherungsblech ist weiterhin an seiner dem zu haltenden Ende des Bearbeitungseinsatzes entgegengesetzten Seite mit einer Stirnplatte ausgebildet, auf die eine im Inneren des Stößels angeordnete Druckfeder wirkt. Die Stirnfläche des Sicherungsbleches dient so zusätzlich als federbelasteter Anschlag für das zu haltende Ende des Bearbeitungseinsatzes im Aufnahmeelement, dem Stößel.

Vorzugsweise ist zwischen dem Aufnahmeelement und dem Spannelement ein Rückstellelement, beispielsweise eine Spiralfeder, angeordnet, die das Spannelement gegenüber dem Aufnahmeelement automatisch in eine verriegelte Stellung zur Festlegung des zu haltenden Endes des Bearbeitungseinsatzes bringt. Die Spiralfeder kann beispielsweise in einem Ringraum zwischen dem hohlzylindrischen Stößel und der Hülse um den Stößel gelegt sein. Die Feder greift mit einem Ende radial um das Führungselement, den Bolzen, und mit ihrem anderen Ende in eine radiale Öffnung der Hülse.

Sofern es sich bei dem Bearbeitungseinsatz um ein flaches Element wie beispielsweise ein Sägeblatt handelt, kann es zur Befestigung oder zum Lösen des Bearbeitungseinsatzes ausreichen, die Hülse gegenüber dem Stößel lediglich um einen Winkel von ca. 90° zu verdrehen

Ausführungsbeispiele der erfindungsgemäßen Spanneinrichtung sind nachstehend anhand der Zeichnung näher erläutert.

In der Zeichnung zeigt:
- Fig. 1: eine Ansicht eines Werkzeugs mit auswechselbarem Bearbeitungseinsatz an einer Spanneinrichtung,
- Fig. 2: einen axialen Schnitt durch eine Spanneinrichtung,
- Fig. 2a: eine vergrößerte Darstellung der Einzelheit II in Fig. 2,
- Fig. 3: einen um 90° gedrehten axialen Schnitt durch eine Spanneinrichtung in Fig. 2,
- Fig. 3a: eine vergrößerte Darstellung der Einzelheit III in Fig. 3,
- Fig. 4: eine Ansicht eines Sicherungsbleches einer Spanneinrichtung,
- Fig. 4a: eine Draufsicht auf das Sicherungsblech in Fig. 4,
- Fig. 4b: eine Abwicklung des Sicherungsblechs in Fig. 4,
- Fig. 5: eine Seitenansicht eines Führungselements in Form eines Bolzens,
- Fig. 5a: einen Querschnitt durch den Bolzen entlang der Linie V-V in Fig. 5,
- Fig. 6: eine Seitenansicht eines Spannelements,
- Fig. 6a: einen Querschnitt entlang der Linie VI-VI durch das Spannelement in Fig. 6,
- Fig. 6b: eine Ansicht der Spannfläche des Spannelements in Fig. 6,
- Fig. 7: eine perspektivische Ansicht einer Entriegelungshilfe für die Spanneinrichtung.

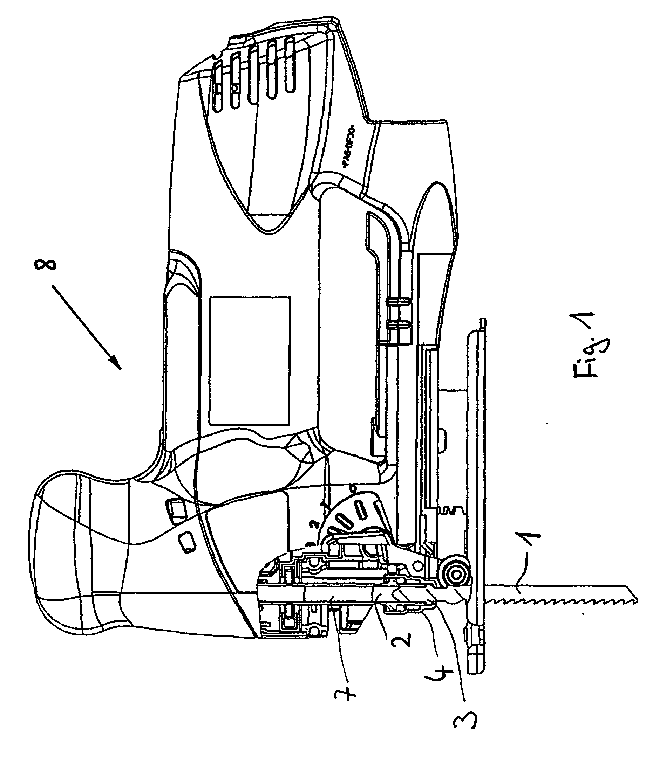

In Fig. 1 ist ein Werkzeug 8 mit einem Bearbeitungseinsatz 1 gezeigt. Es handelt sich hierbei um eine Stichsäge, deren elektromotorischer Antrieb einen hohlzylindrischen Stößel 7 alternierend antreibt. Der Stößel 7 ist Teil einer Spanneinrichtung und dient als Aufnahmeelement 2 für das dem Werkzeug 8 zugewandte, sägezahnlose Ende 3 des Bearbeitungseinsatzes 1, einem Sägeblatt. Das Ende 3 des Sägeblatts ist mit dem Spannelement 4 in Form einer Hülse am Stößel 7 gehalten.

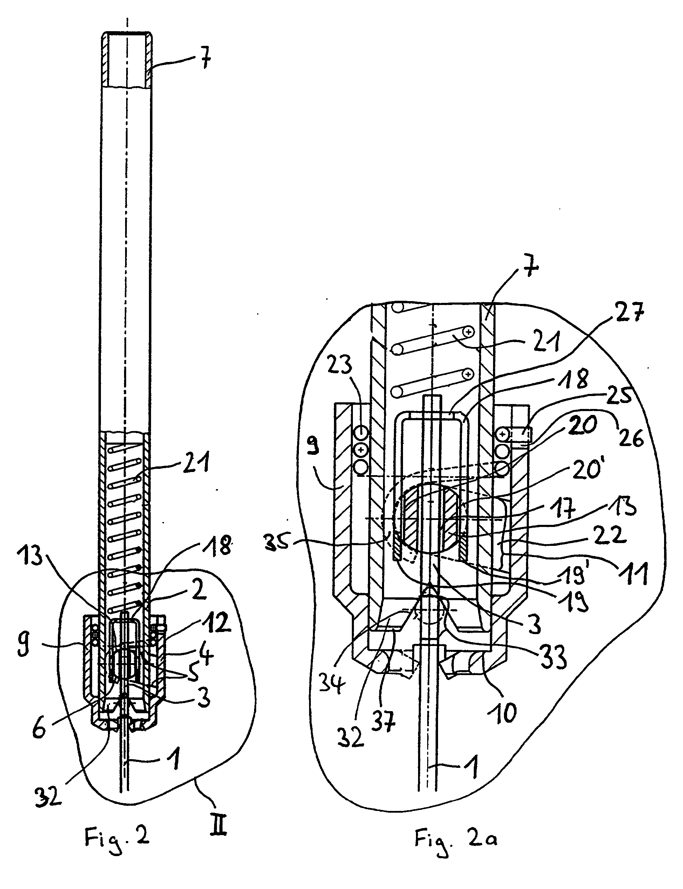

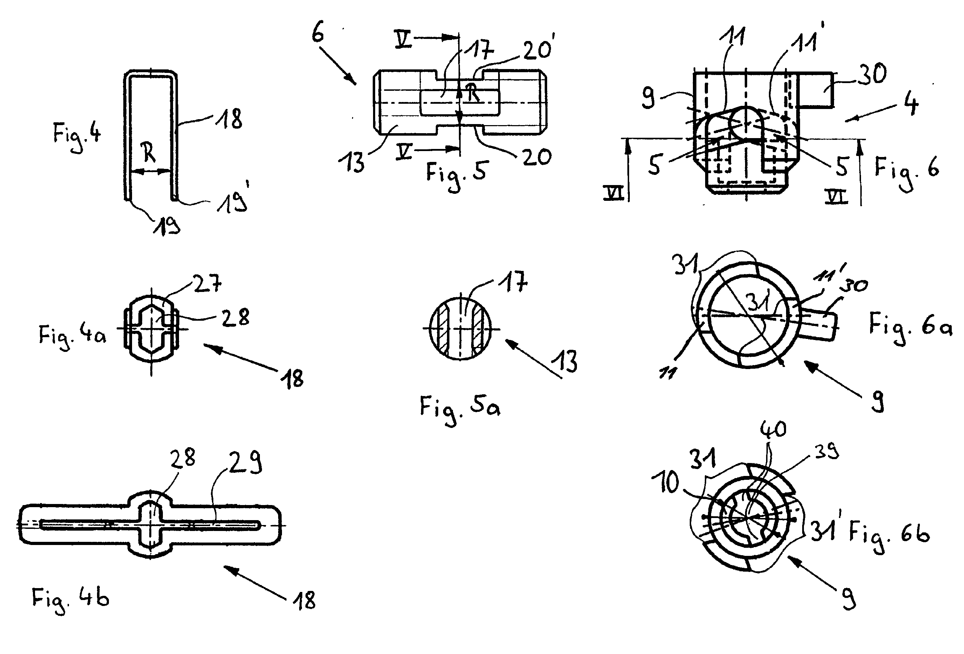

Fig. 2 zeigt einen axialen Schnitt durch die Spanneinrichtung der Stichsäge. Das Aufnahmeelement 2, welches zur Aufnahme des Bearbeitungseinsatzes 1 dient, ist als hohlzylindrischer Stößel 7 ausgebildet. Das Spannelement 4 besteht aus einer Hülse 9, die mit ihrem Mantel 12 den Stößel 7 umgibt. In einer Aufnahmeöffnung 32 im Stößel 7 befindet sich das zu haltende Ende 3 des Bearbeitungseinsatzes 1, bei dem es sich in dem gezeigten Ausführungsbeispiel um ein Sägeblatt handelt. Die Aufnahmeöffnung 32 im Stößel 7 verjüngt sich konisch zum Ende 3 des Sägeblattes hin, um dieses leichter einführen zu können. Ein Führungselement 6, welches als im wesentlichen zylindrischer Bolzen 13 ausgebildet und mit einer Öffnung versehen ist, ist quer durch den Stößel 7 geführt und wird vom Ende 3 des Sägeblatts durchragt. Im Inneren des Stößels 7 ist ein U-förmiges Sicherungsblech 18 vorgesehen, welches vorzugsweise aus Federstahl ausgebildet ist und den Bolzen 13 überkragt. Das Sicherungsblech 18 wird in näherer Weise in den Fig. 4, 4a und 4b beschrieben und dient zur Sicherung des Bolzens 13 gegen axiales Verschieben im Stößel 7. Das Sicherungsblech 18 wird durch eine im hohlzylindrischen Stößel 7 eingelegte Druckfeder 21, deren Windungen mit Abstand zueinander liegen, auf Druck in Richtung auf die Aufnahmeöffnung 32 belastet. Der Bolzen 13 ist im Mantel 12 der Hülse 9 in einer Schrägführung 5 verschieblich gelagert, die nachfolgend in Fig. 2a näher beschrieben ist.

Die Fig. 2a zeigt die Einzelheit II in Fig. 2. Es gelten für dieselben Bauteile dieselben Bezugszeichen. Das Ende 3 des Sägeblattes befindet sich in der Aufnahmeöffnung 32 des Stößels 7, wobei Vorsprünge 33 des Sägeblattes an sich gegenüberliegenden Zentrierkeilen 34 am stirnseitigen Rand 37 des Stößels 7 zu liegen kommen. Die Hülse 9 umgibt den Stö-ßel 7 im Bereich von dessen Aufnahmeöffnung 32 mit geringem Spiel. Die Spannfläche 10 der Hülse 9 klemmt die Vorsprünge 33 am Sägeblatt in die diametral am stirnseitigen Rand 37 des Stößels 7 gegenüberliegenden Zentrierkeile 34, wodurch das Ende 3 des als Sägeblatt ausgebildeten Bearbeitungseinsatzes 1 eine erste Lagefixierung im Stößel 7 erfährt. Das Ende 3 des Bearbeitungseinsatzes 1 durchragt eine schlitzförmige Aussparung 17 im Bolzen 13 mit geringem Spiel. Am Umfang des Bolzens 13 sind zwei Ausnehmungen 20, 20' angebracht. Das Sicherungsblech 18 überkragt den Bolzen 13 auf dessen der Druckfeder 21 im Inneren des Stößels 7 zugewandten Seite und greift mit seinen Schenkeln 19, 19' paßgenau in die Ausnehmungen 20, 20' ein. Die Druckfeder 21 wirkt auf eine Stirnplatte 27 des Sicherungsbleches 18.

Die Schrägführung 5 in der Hülse 9 in Fig. 2 ist in Fig. 2a als Nut 11 und einer nicht gezeigten diametral gegenüberliegenden weiteren Nut ausgebildet, wobei die lichte Weite dem Durchmesser der in die Nut eingreifenden Enden des Bolzens 13 entspricht. Wird die Hülse 9 relativ zum Stößel 7 gedreht, so ergibt sich aufgrund des Zusammenwirkens der Enden des Bolzens 13 mit der Nut 11 eine axiale Verschiebung der Hülse 9 in Spannstellung.

Zwischen der Innenwandung der Hülse 9 und der Mantelfläche des Stößels 7 ist ein Ringraum 22 gebildet, in dem sich eine Spiralfeder 23 befindet. Diese Spiralfeder 23 soll eine Rückstellung der Hülse 9 in Drehrichtung bewirken, wobei die Hülse 9 in Richtung auf die Spannstellung vorgespannt wird. Diese Wirkung der Spiralfeder 23 wird dadurch erreicht, daß ein erstes Ende 35 der Spiralfeder um den Bolzen 13 und ein zweites Ende 25 radial nach außen in eine Öffnung 26 der Hülse 9 eingreift.

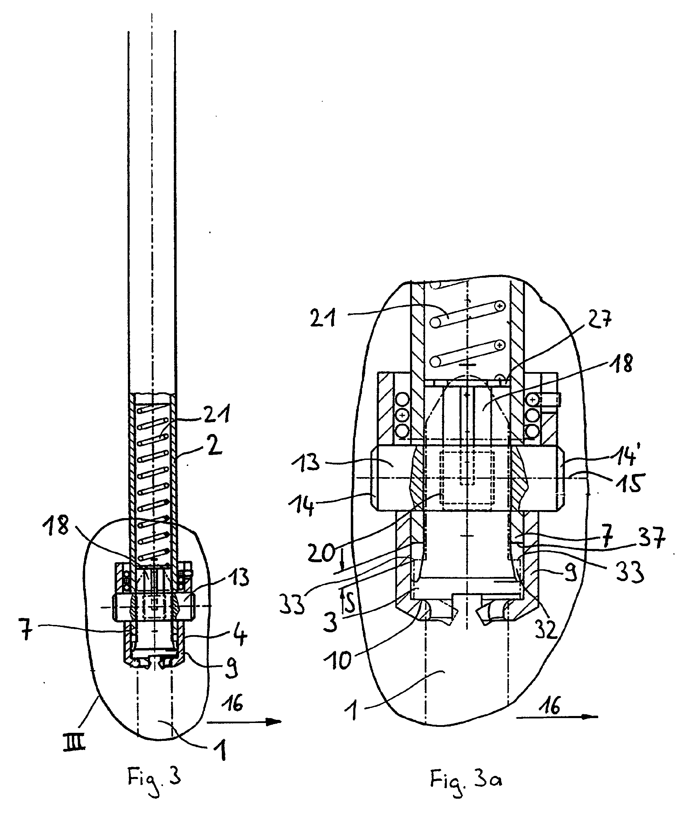

Fig. 3 zeigt einen axialen Schnitt durch die Spanneinrichtung, wobei das Aufnahmeelement 2 um 90° gegenüber der in Fig. 2 gezeigten Position gedreht ist. Der Bearbeitungseinsatz 1 ist in seiner Arbeitsrichtung 16 gezeigt. Das Spannelement 4 ist zusätzlich um etwa 90° gegenüber dem Aufnahmeelement 2 gedreht, und das Ende des Bearbeitungseinsatzes 1 ist entriegelt, wie Fig. 3a zeigt. Für gleiche Bauteile sind gleiche Bezugszeichen wie in Fig. 2 gewählt.

In Fig. 3a ist die Einzelheit III in Fig. 3 gezeigt. Es gelten für gleiche Bauteile die gleichen Bezugszeichen wie in Fig. 2a. Die Hülse 9 ist gegenüber der zuvor beschriebenen Darstellung im hohlzylindrischen Stößel 7 um etwa 90° gedreht und aufgrund der Schrägführung der Hülse 9 für die Enden 14, 14' des Bolzens 13 sind die Vorsprünge 33 am Bearbeitungseinsatz 1, dem Sägeblatt, nicht mehr wie in Fig. 2a zwischen der Spannfläche 10 und dem Rand 37 des hohlzylindrischen Stößels 7 geklemmt. Es stellt sich ein Spalt S zwischen den Vorsprüngen 33 und dem Rand 37 der Aufnahmeöffnung 32 des hohlzylindrischen Stößels 7 ein. Der Bearbeitungseinsatz 1 ist aus der Spanneinrichtung entnehmbar.

Die Fig. 4 zeigt eine Ansicht des Sicherungbleches 18 der Spanneinrichtung und die Fig. 4a das Sicherungsblech 18 in Draufsicht, d.h. in Richtung der Längsachse des hohlzylindrischen Stößels betrachtet. Das Sicherungsblech 18 ist ein im wesentlichen streifenförmiges Bauteil aus beispielsweise Federstahlmaterial. Es ist U-förmig gebogen mit einem Abstand R der abgewinkelten Schenkel 19, 19', der dem Abstand R der Flächen 20, 20' am Bolzen 13, wie in Fig. 5 gezeigt, in etwa entspricht. Die Stirnplatte 27 ist mit einer rautenförmigen Ausnehmung 28 zur Aufnahme des Endes des Bearbeitungseinsatzes versehen. Die rautenförmige Ausnehmung 28 setzt sich als abgeschlossener Schlitz 29 an den beiden Schenkeln 19, 19' fort.

Die Fig. 4b zeigt eine Abwicklung des Sicherungsbleches 18 in Fig. 4. Das Sicherungsblech 18 ist mit dem Schlitz 29, der in etwa über 4/5 der Länge des Sicherungsblechs 18 reicht, versehen. Der Schlitz 29 bewirkt, daß das Sicherungsblech 18 quer zu seiner Längsachse elastische Eigenschaften zeigt und das Ende des Bearbeitungseinsatzes in der rautenförmigen Ausnehmung 28 des Sicherungsbleches 18 starr geführt ist.

Die Fig. 5 zeigt eine Seitenansicht des Führungselementes 6 in Form des Bolzens 13. Der Bolzen 13 ist im wesentlichen zylinderförmig mit einer Länge, die zumindest der Länge des Außendurchmessers der Hülse in dem Bereich entspricht, in dem der Bolzen 13 in Nuten der Hülse geführt ist (vgl. Fig. 6). An der Mantelfläche des Bolzens 13 sind - bezogen auf seine Länge mittig - an gegenüberliegenden Seiten Ausnehmungen 20, 20' mit ebenen Grundflächen vorgesehen, die zur Anlage der beiden Schenkel 19, 19' des Sicherungsbleches 18 dienen und den Bolzen 13 so gegen axiales Verschieben in dem Aufnahmeelement, nämlich dem hohlzylindrischen Stößel 7, sichern. Die rechteckförmige Aussparung 17 durchdringt den Bolzen 13 vollständig und ist in ihrer Querschnittsfläche so gestaltet, daß sie von dem Ende des Bearbeitungseinsatzes ganz durchquert werden kann.

Die Fig. 5a zeigt einen Querschnitt des Bolzens 13 entlang der Linie V-V in Fig. 5. Die Kanten der Aussparung 17 sind angefast, so daß das in die Aussparung 17 einzuführende Ende des Bearbeitungseinsatzes leichter eingeführt werden kann.

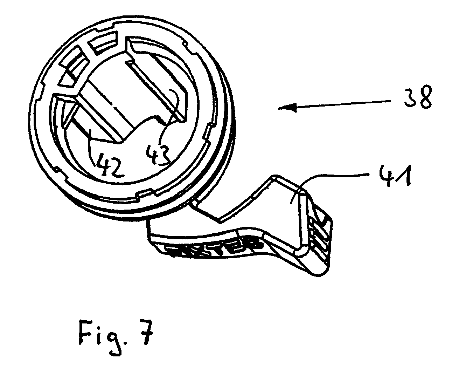

Fig. 6 zeigt eine Seitenansicht des Spannelementes 4 in Form der Hülse 9. Am Umfang der Hülse 9 sind im Bereich ihrer halben Höhe zwei Schrägführungen 5 in Form von Nuten 11, 11' angeordnet. Die Nuten 11, 11' durchbrechen den Mantel der Hülse 9 vollkommen über einen Bereich 31, 31' wie in Fig. 6a gezeigt. An dem der Spannfläche 10 gegenüberliegenden Rand der Hülse 9 ragt ein Betätigungsstutzen 30 radial aus dem Mantel der Hülse 9 hervor. Der Stutzen 30 dient zum Betätigen des Mechanismus oder Ansetzen eines Entriegelungshilfswerkzeugs wie dies Fig. 7 zeigt, damit die Hülse 9 entgegengesetzt der Kraftrichtung der Spiralfeder entriegelt werden kann.

Die Fig. 6a zeigt einen Querschnitt entlang der Linie VI-VI in Fig. 6 durch die Hülse 9. Die Erstreckungsbereiche 31, 31' der Nuten 11, 11' in Fig. 6 bezüglich des Umfangs der Hülse 9 sind hier verdeutlicht. Die Bereiche 31, 31' erstrecken sich am Umfang der Hülse 9 jeweils gegenüberliegend über einen Sektor von etwa 120°.

Die Fig. 6b zeigt eine Draufsicht auf die Spannfläche 10 der Hülse 9. Zentral in der Spannfläche 10 ist eine kreisförmige Ausnehmung 39 mit zu den Bereichen 31, 31' hinzeigenden, aus der Umfangsfläche der kreisförmigen Ausnehmung herausragenden Schlitzen 40 angebracht. Die Ausnehmung 39 dient dazu, den Bearbeitungseinsatz durch die Hülse in das Aufnahmeelement einzuführen.

In Fig. 7 ist eine perspektivische Ansicht einer Entriegelungshilfe 38 für die Spanneinrichtung gezeigt. Die Entriegelungshilfe 38 besteht im wesentlichen aus einem hülsenförmigen Bauteil mit nach innen angesetzten Rastflächen 42, 43 und mit einem an dessen Umfang abkragenden Finger-Griffelement 41. Die Entriegelungshilfe 38 kann zur Entriegelung der Spanneinrichtung über die Hülse 9, wie in Fig. 6 gezeigt, gestülpt werden und mit dem Betätigungsstutzen 30 in Fig. 6 verrastet werden. Das Finger-Griffelement der Entriegelungshilfe 38 ermöglicht ein bequemes Drehen der Hülse 9 und somit ein Entriegeln des Bearbeitungseinsatzes, welcher zwischen der Hülse und dem Aufnahmeelement festgelegt ist.

## Patentansprüche

1. Spanneinrichtung, insbesondere für Werkzeuge (8) mit auswechselbaren Bearbeitungseinsätzen (1), mit einem Aufnahmeelement (2) für ein zu haltendes Ende (3) eines Bearbeitungseinsatzes (1) und einem Spannelement (4), wobei das Aufnahmeelement (2) gegen das Spannelement (4) verdrehbar und axial verschiebbar ist, wobei das Spannelement (4) eine Schrägführung (5), in der ein in das Aufnahmeelement (2) eingesetztes Führungselement (6) geführt ist, aufweist,
**dadurch gekennzeichnet, daß** das Führungselement (6) eine Aussparung (17) für das zu haltende Ende (3) des Bearbeitungseinsatzes (1) aufweist, wobei die Aussparung (17) in ihrer Querschnittsfläche so gestaltet ist, daß sie von dem Ende (3) des Bearbeitungseinsatzes (1) ganz durchquert werden kann.

2. Spanneinrichtung nach Anspruch 1,
**dadurch gekennzeichnet, daß** das Aufnahmeelement (2) ein hohlzylindrischer Stößel (7) eines eine alternierende Längsbewegung ausführenden Werkzeuges (8) ist.

3. Spanneinrichtung nach einem der Ansprüche 1 oder 2,
**dadurch gekennzeichnet, daß** das Spannelement (4) eine Hülse (9) mit einem Mantel (12) ist, deren einem stirnseitigen Rand (37) des Stößels (7) benachbarter Bereich eine auf den Bearbeitungseinsatz (1) wirkende Spannfläche (10) aufweist.

4. Spanneinrichtung nach Anspruch 3,
**dadurch gekennzeichnet, daß** die Schrägführung (5) durch zwei Nuten (11, 11') in dem Mantel (12) der Hülse (9) gebildet ist, wobei die Nuten (11, 11') sich gegenüberliegend und bezogen auf die Spannfläche (10) schräg verlaufend angeordnet sind.

5. Spanneinrichtung nach Anspruch 4,
**dadurch gekennzeichnet, daß** das Führungselement (6) im Aufnahmeelement (2) ein Bolzen (13) ist, der das Aufnahmeelement (2) quer durchragt und mit seinen beiden Enden (14, 14') in den Nuten (11, 11') im Mantel (12) der Hülse (9) geführt ist.

6. Spanneinrichtung nach Anspruch 5,
**dadurch gekennzeichnet, daß** die Längsachse (15) des Bolzens (13) in Arbeitsrichtung (16) des Bearbeitungseinsatzes (1) gerichtet ist, und daß die Aussparung (17) in dem Bolzen (13) vorgesehen ist.

7. Spanneinrichtung nach einem der Ansprüche 5 und 6,
**dadurch gekennzeichnet, daß** ein Sicherungsblech (18) in dem hohlzylindrischen Stößel (7) den Bolzen (13) überkragt und die beiden Schenkel (19, 19') des Sicherungsblechs (18) in Ausnehmungen (20, 20') am Umfang des Bolzens (13) eingreifen und der Bolzen (13) gegen axiales Verschieben gesichert ist.

8. Spanneinrichtung nach Anspruch 7,
**dadurch gekennzeichnet, daß** das Sicherungsblech (18) mit einer im hohlzylindrischen Stößel (7) angeordneten Druckfeder (21) auf den Bolzen (13) gedrückt ist.

9. Spanneinrichtung nach einem der Ansprüche 3 bis 8,
**dadurch gekennzeichnet, daß** zwischen dem hohlzylindrischen Stößel (7) und der Hülse (9) ein Ringraum (22) gebildet ist, in dem eine Spiralfeder (23) um den hohlzylindrischen Stößel (7) gelegt ist und die Spiralfeder (23) radial um den Bolzen (13) und mit dem anderen Ende (25) in eine radiale Öffnung (26) der Hülse (9) greift.

10. Spanneinrichtung nach Anspruch 9,
**dadurch gekennzeichnet, daß** die Spiralfeder (23) das Spannelement (4) gegenüber dem Aufnahmeelement (2) so verdreht, daß die Spannfläche (10) der Hülse (9) auf das zu haltende Ende (3) des Bearbeitungseinsatzes (1) wirkt.

## Claims

1. Holding device, in particular for tools (8) with exchangeable machining inserts (1), with a holding element (2) for an end (3) of a machining insert (1) to be held and a clamping element (4), such that the holding element (2) can be rotated and displaced axially relative to the clamping element (4), the clamping element (4) comprising an oblique guide (5) in which a guiding element (6) inserted in the holding element (2) is guided, **characterised in that** the guiding element (6) comprises a cutout (17) for the end (3) of the machining insert (1) to be held, and the cross-sectional area of the said cutout (17) is designed such that the end (3) of the machining insert (1) can pass completely through it.

2. Holding device according to Claim 1, **characterised in that** the holding element (2) is a hollow-cylindrical plunger of a tool (8) which undergoes alternating longitudinal movement.

3. Holding device according to Claims 1 or 2, **characterised in that** the clamping element (4) is a sleeve (9) with an outer shell (12), whose area close to a front edge (37) of the plunger (7) has a clamping surface (10) which acts upon the machining insert (1).

4. Holding device according to Claim 3, **characterised in that** the oblique guide (5) is formed by two grooves (11, 11') in the surface of the sleeve (9), the grooves (11, 11') being arranged opposite one another and extending obliquely relative to the clamping surface (10).

5. Holding device according to Claim 4, **characterised in that** the guiding element (6) in the holding element (2) is a bolt (13), which passes transversely through the holding element (2) and is guided with its two ends (14, 14) in the grooves (11, 11') in the surface (12) of the sleeve (9).

6. Holding device according to Claim 5, **characterised in that** the longitudinal axis (15) of the bolt (13) is orientated in the working direction (16) of the machining insert (1), and the cutout (17) is provided in the bolt (13).

7. Holding device according to either of Claims 5 and 6, **characterised in that** a locking plate (18) in the hollow-cylindrical plunger (7) overhangs the bolt (13) and the two arms (19, 19') of the locking plate (18) engage in recesses (20, 20') at the periphery of the bolt (13) and the bolt (13) is secured against axial displacement.

8. Holding device according to Claim 7, **characterised in that** the locking plate (18) is pressed against the bolt (13) by a compression spring (21) arranged inside the hollow-cylindrical plunger (7).

9. Holding device according to any of Claims 3 to 8, **characterised in that** an annular space (22) is formed between the hollow-cylindrical plunger (7) and the sleeve (9), inside which a helical spring (23) is fitted around the hollow-cylindrical plunger (7), and the helical spring (23) engages radially around the bolt (13) and at its other end (25) in a radial opening (26) of the sleeve (9).

10. Holding device according to Claim 9, **characterised in that** the helical spring (23) rotates the clamping element (4) relative to the holding element (2) in such a manner that the clamping surface (10) of the sleeve (9) acts upon the end (3) of the machining insert (1) to be held.

## Revendications

1. Dispositif de serrage, en particulier pour des outils (8) comprenant des pièces de travail interchangeables (1), un élément de logement (2) pour une extrémité (3), à tenir, d'une pièce de travail (1) et un élément de serrage (4), où l'élément de logement (2) peut être tourné et déplacé axialement contre l'élément de serrage (4), où l'élément de serrage (4) présente un guidage incliné (5) dans lequel est guidé un élément de guidage (6) introduit dans l'élément de logement (2), **caractérisé en ce que** l'élément de guidage (6) présente un évidement (17) pour l'extrémité (3), à tenir, de la pièce de travail (1), où l'évidement (17), dans sa surface de section, est configuré de manière telle, qu'il puisse être traversé complètement par l'extrémité (3) de la pièce de travail (1).

2. Dispositif de serrage selon la revendication 1, **caractérisé en ce que** l'élément de logement (2) est un coulisseau cylindrique creux (7) d'un outil (8) exécutant un mouvement longitudinal alternant.

3. Dispositif de serrage selon la revendication 1 ou 2, **caractérisé en ce que** l'élément de serrage (4) est une douille (9) comprenant un corps (12), douille dont la zone voisine d'un bord frontal (37) du coulisseau (7) présente une surface de serrage (10) agissant sur la pièce de travail (1).

4. Dispositif de serrage selon la revendication 3, **caractérisé en ce que** le guidage incliné (5) est formé par deux rainures (11, 11') dans le corps (12) de la douille (9), où les rainures (11, 11') sont disposées en étant placées à l'opposé l'une de l'autre et en s'étendant de façon inclinée par rapport à la surface de serrage (10).

5. Dispositif de serrage selon la revendication 4, **caractérisé en ce que** l'élément de guidage (6), dans l'élément de logement (2), est un axe (13) qui traverse transversalement l'élément de logement (2) et, par ses deux extrémités (14, 14') dans les rainures (11, 11'), est guidé dans le corps (12) de la douille (9).

6. Dispositif de serrage selon la revendication 5, **caractérisé en ce que** l'axe longitudinal (15) de l'axe (13) est orienté dans la direction de travail (16) de la pièce de travail (1), et **en ce que** l'évidement (17) est prévu dans l'axe (13) .

7. Dispositif de serrage selon la revendication 5 ou 6, **caractérisé en ce qu'**une tôle de sûreté (18), dans le coulisseau cylindrique creux (7), dépasse de l'axe (13), et les deux branches (19, 19') de la tôle de sûreté (18) s'engagent dans des évidements (20, 20') au niveau de la circonférence de l'axe (13), et l'axe (13) est protégé contre un déplacement axial.

8. Dispositif de serrage selon la revendication 7, **caractérisé en ce que** la tôle de sûreté (18), comprenant un ressort de compression (21) disposé dans le coulisseau cylindrique creux (7), est poussée sur l'axe (13).

9. Dispositif de serrage selon l'une quelconque des revendications 3 à 8, **caractérisé en ce qu'**un espace annulaire (22) est formé entre le coulisseau cylindrique creux (7) et la douille (9), espace annulaire dans lequel un ressort à spirale (23) est placé autour du coulisseau cylindrique creux (7), et le ressort à spirale (23) s'applique radialement autour de l'axe (13) et, par l'autre extrémité (25), s'engage dans une ouverture radiale (26) de la douille (9).

10. Dispositif de serrage selon la revendication 9, **caractérisé en ce que** le ressort à spirale (23) fait tourner l'élément de serrage (4) par rapport à l'élément de logement (2), de manière telle que la surface de serrage (10) de la douille (9) agisse sur l'extrémité (3), à tenir, de la pièce de travail (1).
